# EUROPEAN PATENT APPLICATION

(11) **EP 4 484 840 A1**
(43) Date of publication of application: **01.01.2025**
(21) Application number: 24169524.6
(22) Date of filing: 10.04.2024
(51) Int. Cl.: F24F 11/00, F24F 11/79, F24F 110/50

(54) **SYSTEM AND METHOD TO CONTROL OPERATION OF AN HVAC SYSTEM FOR CONDITIONING INDOOR AIR QUALITY**

(30) Priority: 26.04.2023 US 202363498343 P
(71) Applicant: Carrier Corporation, Palm Beach Gardens, FL 33418 (US)
(72) Inventor: ANNAVARAM, Rakesh, 500081 Telargana (IN); KUMAR, Vikas, 500081 Telargana (IN); NAIR, Jayesh Vasudevan, 500081 Telargana (IN); JAKKEPALLI, Anuradha, 500081 Telargana (IN); KUKKALA, Naresh, 500081 Telargana (IN)
(74) Representative: Dehns

(57) **Abstract**

A system to control operation of an HVAC unit 104 for conditioning indoor air quality in a multizone area is disclosed. The system comprises a controller 108 adapted to be operatively connected to an air handling unit (AHU) 106 associated with the HVAC unit 104. The controller 108 is configured to receive, from one or more sensors S installed at a plurality of zones Z of an area of interest (AOI), a set of data packets pertaining to indoor air quality (IAQ) at each of the zones Z in real-time. Further, when the IAQ of any of the plurality of zones Z is detected to be above a first predefined level, the controller 108 enables the AHU 106 and the HVAC unit 104 to circulate air from at least one of the remaining zones having the IAQ below the first predefined level to the zones having the IAQ above the first predefined level.

## Description

### BACKGROUND

This invention relates to the field of HVAC systems and indoor air quality control, and more particularly, a system and method to control the operation and enhance the efficiency of an HVAC system while maintaining indoor air quality

In a multi-zone environment, a duct-based HVAC system may be used for circulating conditioned air between the HVAC system and different zones. An air handling unit (AHU) may be employed to send fresh air throughout the ducts across different zones in a timely manner irrespective of localized indoor air quality (IAQ) values at the zones. IAQ may be negatively affected because of increased levels of CO, CO2, VOCs, particulates, or bacteria present in the zones or environment. The intake air volume by the AHU may depend upon the AQI level of exhaust air where the localized IAQ value is never considered. This may drive the AHU to take higher air intake to supply across the zones. As a result, the IAQ levels may not be uniformly maintained across the zones. Moreover, as the intake air volume is more, conditioning and cooling of this intake air may require more energy, which may reduce the efficiency of the system.

### SUMMARY

According to a first aspect, there is provided a system to control operation of an HVAC unit for conditioning indoor air quality in a multi-zone area. The system comprises a controller adapted to be operatively connected to an air handling unit (AHU) associated with the HVAC unit; wherein the controller comprises a processor coupled to a memory storing instructions executable by the processor. The controller is configured to receive, from one or more sensors installed at a plurality of zones of an area of interest (AOI), a set of data packets pertaining to indoor air quality (IAQ) at each of the zones in real-time, and wherein when the IAQ of any of the plurality of zones is detected to be above a first predefined level, the controller enables the AHU and the HVAC unit to circulate air from at least one of the remaining zones having the IAQ below the first predefined level to the zones having the IAQ above the first predefined level.

In one or more embodiments, the controller may be configured to determine a volume of the air to be circulated to each of the zones having the IAQ below the first predefined level, based on the real-time IAQ at the plurality of zones.

In one or more embodiments, the controller may be configured to monitor or determine an average air quality index (AQI) at an exhaust of the AHU, wherein when the average AQI at the exhaust of the AHU is detected to be above a second predefined level, the controller enables the AHU to supply outside air into the AOI.

In one or more embodiments, the controller may be configured to determine a volume of the outside air to be supplied into the AOI based on the real-time IAQ at the plurality of zones.

In one or more embodiments, the controller may be associated with the AHU, wherein the AHU is configured to receive and store the set of data packets pertaining to the IAQ at each of the zones in real-time, and circulate the air between the zones having the IAQ above the first predefined level and at least one of the remaining zones having the IAQ below the first predefined level.

In one or more embodiments, when the average AQI at the exhaust of the AHU is detected to be above the second predefined level, the AHU may be configured to supply the outside air into the AOI.

In one or more embodiments, the controller may be associated with a server that is in communication with the one or more sensors and the AHU, wherein the server is configured to receive and store the set of data packets pertaining to the IAQ at each of the zones in real-time, and transmit a first set of actuation signals to the AHU to enable the AHU to circulate the air between the zones having the IAQ above the first predefined level and at least one of the remaining zones having the IAQ below the first predefined level.

In one or more embodiments, when the average AQI at the exhaust of the AHU is detected to be above the second predefined level, the server may be configured to transmit a second set of actuation signals to the AHU to enable the AHU to supply the outside air into the AOI.

In one or more embodiments, the HVAC unit may comprise a supply air stream duct comprising a plurality of interconnected supply channels to facilitate inflow of a supply air into the plurality of zones of the AOI, a return air duct comprising a plurality of interconnected return channels to facilitate outflow of a return air from each of the zones, a plurality of zone dampers installed in the plurality of interconnected supply channels such that one of the zone dampers is configured in each of the supply channels for individually regulating the flow of the supply air into each of the zones, wherein when the IAQ of any of the plurality of zones is detected to be above a first predefined level, the controller actuates at least one of the zone dampers to circulate the air from at least one of the remaining zones having the IAQ below the first predefined level to the zones having the IAQ above the first predefined level.

In one or more embodiments, the HVAC unit may comprise a central damper configured between the AHU and the supply air stream duct, wherein the central damper is configured to regulate the flow of the supply air comprising any or a mixture of the outside air and the return air into the supply airstream duct, and wherein when the average AQI at the exhaust of the AHU is detected to be above the second predefined level, the controller enables the central damper to supply the outside air into the AOI or the supply air stream duct.

According to a second aspect, there is provided a method to control operation of an HVAC system for conditioning indoor air quality in a multi-zone area. The method comprises the steps of: receiving, by an air handling unit (AHU) associated with the HVAC unit, a set of data packets pertaining to indoor air quality (IAQ) at each of a plurality of zones at an area of interest; monitoring the IAQ of the plurality of zones in real-time; and when the IAQ of any of the plurality of zones is detected to be above a first predefined level, circulating air between the zones having the IAQ above the first predefined level and at least one of the remaining zones having the IAQ below the first predefined level.

In one or more embodiments, the method may comprise the step of actuating at least one of a plurality of zone dampers associated with the zones of the AOI, to circulate air from at least one of the remaining zones having the IAQ below the first predefined level to the zones having the IAQ above the first predefined level.

In one or more embodiments, the method may comprise the steps of monitoring an average air quality index (AQI) at an exhaust of the AHU, and enabling the AHU to supply outside air into the AOI when the average AQI at the exhaust of the AHU is detected to be above a second predefined level.

In one or more embodiments, the method may comprise the step of enabling a central damper at the exhaust of the AHU to supply the outside air into the AOI when the average AQI at the exhaust of the AHU is detected to be above a second predefined level.

According to a third aspect, there is provided a heating ventilation and air conditioning (HVAC) system for an area of interest (AOI) divided into a plurality of zones. The HVAC system comprises a supply air stream duct comprising a plurality of interconnected supply channels to facilitate supply of a supply air to the plurality of zones, a return air duct for providing a plurality of interconnected return channels to facilitate recirculation of a return air from each of the zones, a plurality of zone dampers installed in the plurality of interconnected supply channels such that one of the zone dampers is configured in each of the supply channels for individually regulating the flow of supply air into each of the zones, one or more sensors installed at the plurality of zones, the sensors being operable to monitor indoor air quality (IAQ) at each of the zones in real-time, and an air handling unit (AHU) fluidically connected to the supply air stream duct and the return air stream duct, wherein the AHU is in communication with the one or more sensors, wherein when the IAQ of any of the plurality of zones is detected to be above a first predefined level, the AHU and/or the HVAC unit are/is configured to actuate at least one of the zone dampers to circulate air from at least one of the remaining zones having the IAQ below the first predefined level to the zones having the IAQ above the first predefined level.

In one or more embodiments, the HVAC system may comprise a central damper configured to regulate the flow of the supply air comprising any or a mixture of outside air and the return air into the supply airstream duct.

In one or more embodiments, the AHU may be configured to monitor an average air quality index (AQI) at an exhaust of the AHU, and wherein when the average AQI at the exhaust of the AHU is detected to be above a second predefined level, the HVAC system is configured to enable the central damper to supply the outside air into the AOI.

In one or more embodiments, the AHU may be in communication with the one or more sensors, the zone dampers, and the central damper through a server.

In one or more embodiments, the AHU may comprise a heat exchanger to facilitate heat exchange between one or more of the supply air, the outside air, and the return air while flowing through the AHU, and one or more filters to clean the air flowing through the AHU.

In one or more embodiments, the AHU may comprise a cooler configured to cool one or more of the return air, and the outside air while supplying as the supply air into the supply air stream duct, a heater configured to heat one or more of the return air, and the outside air while supplying as the supply air into the supply air stream duct, and a dehumidifier configured to remove moisture from the supply air before supplying into the supply air stream duct.

According to a fourth aspect, there is provided a HVAC system or unit for an area of interest (AOI) divided into a plurality of zones. The HVAC system comprises a system to control operation of the HVAC system or unit according to the first aspect, with any of its optional or preferred features. The HVAC system or unit may be as described according to the third aspect, with any of its optional or preferred features.

The foregoing summary is illustrative only and is not intended to be in any way limiting. In addition to the illustrative aspects, embodiments, and features described above, further aspects, embodiments, features, and techniques of the invention will become more apparent from the following description taken in conjunction with the drawings.

### BRIEF DESCRIPTION OF THE DRAWINGS

The accompanying drawings are included to provide a further understanding of the subject disclosure of this invention and are incorporated in and constitute a part of this specification. The drawings illustrate exemplary embodiments of the subject disclosure and, together with the description, serve to explain the principles of the subject disclosure.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIG. 1 illustrates an exemplary representation of a system implemented with an HVAC system in a multi-zone environment to control the operation and enhance the efficiency of the HVAC system while controlling indoor air quality at the zones.
FIG. 2 illustrates an exemplary detailed view of the air handling unit of FIG. 1.
FIG. 3 illustrates an exemplary flow diagram of a method for controlling the operation and enhancing the efficiency of the HVAC system in a multi-zone environment while controlling indoor air quality at the zones.
FIG. 4 illustrates an exemplary control strategy implemented in the system and method of FIG. 1 and FIG. 3, respectively.

### DETAILED DESCRIPTION

The following is a detailed description of embodiments of the disclosure depicted in the accompanying drawings. The embodiments are in such detail as to clearly communicate the disclosure. However, the amount of detail offered is not intended to limit the anticipated variations of embodiments; on the contrary, the intention is to cover all modifications, equivalents, and alternatives falling within the spirit and scope of the subject disclosure as defined by the appended claims.

Various terms are used herein. To the extent a term used in a claim is not defined below, it should be given the broadest definition persons in the pertinent art have given that term as reflected in printed publications and issued patents at the time of filing.

In the specification, reference may be made to the spatial relationships between various components and to the spatial orientation of various aspects of components as the devices are depicted in the attached drawings. However, as will be recognized by those skilled in the art after a complete reading of the subject disclosure, the components of this invention described herein may be positioned in any desired orientation. Thus, the use of terms such as "above," "below," "upper," "lower," "first", "second" or other like terms to describe a spatial relationship between various components or to describe the spatial orientation of aspects of such components should be understood to describe a relative relationship between the components or a spatial orientation of aspects of such components, respectively, described herein may be oriented in any desired direction.

In a multi-zone environment such as but not limited to a building having multiple floors and multiple rooms, a duct-based heating, ventilation, and air conditioning (HVAC) system may be installed for supplying conditioned and fresh air to different zones. The IAQ at the zones may be negatively affected because of increased levels of CO, CO₂, VOCs, particulates, or bacteria present in the zones or the environment. The HVAC system may include a supply air stream duct having a plurality of interconnected supply channels through which the supply air flows to the zones, and a return air duct having a plurality of interconnected return channels through which the return air from each zone recirculates. The HVAC system may further involve an air handling unit (AHU) connected to the supply air stream duct and the return air stream duct to receive fresh outside air, condition the outside air, and supply the conditioned fresh air throughout the ducts across different zones in a timely manner. However, the AHU in the existing HVAC system may supply conditioned air throughout the ducts across different zones irrespective of the localized indoor air quality (IAQ) values at the zones. For instance, some of the zones may have bad IAQ which may require fresh outside air through the AHU, while other zones may already have better IAQ, still, the existing HVAC system supplies fresh conditioned air to the zones having better IAQ. The intake air volume by the AHU may depend upon the IAQ level of exhaust air where the localized IAQ value is never considered. This may drive the AHU to take higher air intake to supply across the zones. As a result, the IAQ levels may not be uniformly maintained across the zones. Moreover, as the intake air volume is more, conditioning and cooling of this intake air may require more energy, which may reduce the efficiency of the system. This may further damage or affect the nearby equipment and may also be fatal. Thus, there is a need to enhance the efficiency of the HVAC system by efficiently controlling or reducing the outside air requirements based on the localized IAQ values across each zone.

This invention provides a simple, efficient, and cost-effective system and method that may be easily configured with the existing HVAC system and IAQ control system of any multi-zone environment, to control the operation and enhance the efficiency of the HVAC system while controlling the IAQ at each zone of the environment. This may make the overall HVAC system energy efficient, and also lower carbon emission and operation costs.

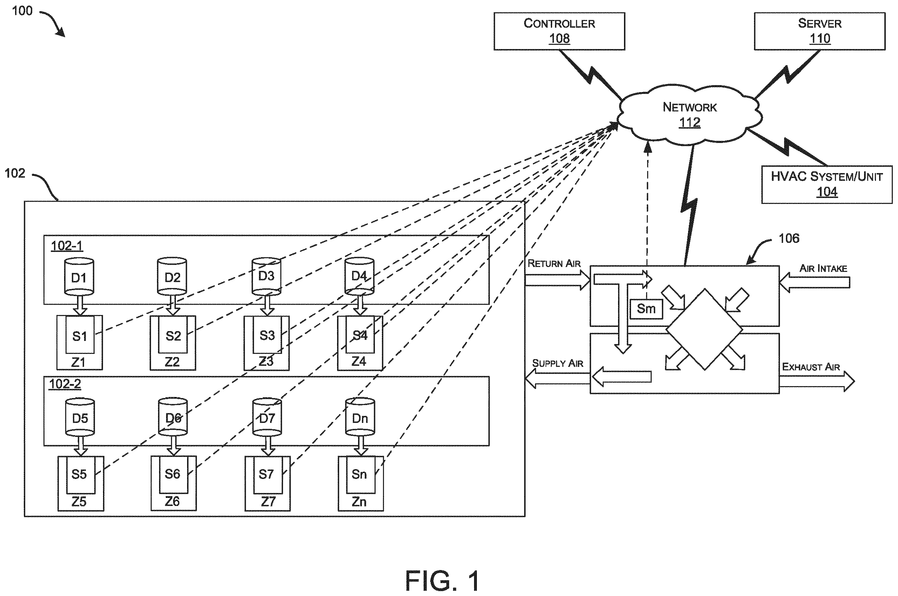

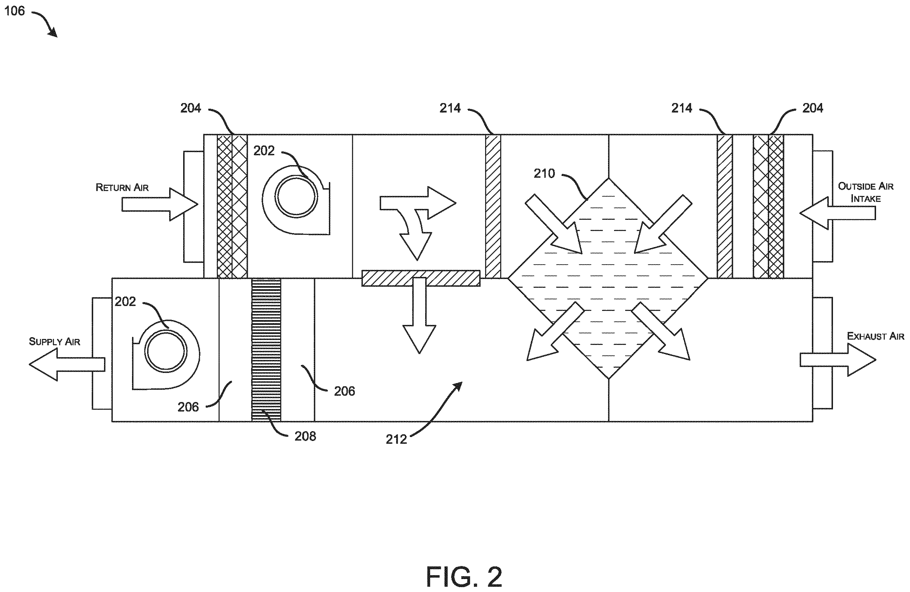

Referring to FIG. 1, a system 100 configured with an HVAC system 104 of a multi-zone environment 102 is disclosed, which controls the operation and enhances the efficiency of the HVAC system 104 while controlling indoor air quality at the zones. The multi-zone environment 102 (also referred to as an area of interest (AOI) 102, herein) may include a plurality of zones Z1 to Zn (collectively referred to as zones (Z), herein), where each zone Z may include an indoor air quality (IAQ) sensor S1 to Sn (collectively referred to as sensors (S), herein), to monitor IAQ of the zones Z. The sensors S may monitor the levels of CO, CO₂, VOCs, particulates, or bacteria present in the zones or the environment 102. The HVAC unit 104/HVAC system 104 installed at the environment/AOI 102 may include a supply air stream duct 102-1, 102-2 comprising a plurality of interconnected supply channels to facilitate the inflow of supply air into the plurality of zones Z of the AOI 102, and a return air duct (not shown) comprising a plurality of interconnected return channels to facilitate outflow of return air from each of the zones. The HVAC system 104 may further include an air handling unit (AHU) 106 fluidically connected to the supply air stream duct 102-1 and the return air stream duct. Furthermore, the HVAC system 104 may include a central damper (not shown) configured to regulate the flow of supply air comprising any or a mixture of outside air and the return air into the supply airstream duct 102-1. A plurality of zone dampers D1 to Dn (collectively referred to as dampers D1, herein), may be installed in the plurality of interconnected supply channels such that one of the zone dampers D is configured in each of the supply channels for individually regulating the flow of supply air into each of the zones. The detailed operation of the HVAC system and the AHU 106 have been described later in conjunction with FIG. 2.

The system 100 may include a controller 108 adapted to the operatively connected to the AHU 106, the dampers D, and other components of the HVAC system 104 to control the operation of the HVAC system 104. The controller 108 may include a processor coupled to a memory storing instructions executable by the processor to enable the controller 108 to perform one or more designated operations. In one or more embodiments, the controller 108 may be associated with the AHU 106 or may be a control unit of the AHU 106. In other embodiments, the controller 108 may be associated with a central server 110 or may be the server 110 itself.

In one or more embodiments, the system 100 or controller 108 can be operatively coupled to a website and so be operable from any Internet-enabled user device. Examples of user devices may include but are not limited to, a portable computer, a personal digital assistant, a handheld device, and a workstation. The sensors S, the dampers D installed at the zones Z of the AOI 102, and other components of the HVAC system 104 may be communicatively coupled to the controller 108 or the server 110 via the controller 108 or directly to the server 110 or directly to the AHU 106 or the AHU 106 via the controller 108, through a network 112 via wired and/or wireless media.

In one implementation, the network 112 can be a wireless network, a wired network or a combination thereof. Network 112 can be implemented as one of the different types of networks, such as intranet, local area network (LAN), wide area network (WAN), the internet, and the like. Further, the network 112 may either be a dedicated network or a shared network. The shared network represents an association of the different types of networks that use a variety of protocols, for example, Hypertext Transfer Protocol (HTTP), Transmission Control Protocol/Internet Protocol (TCP/IP), Wireless Application Protocol (WAP), and the like, to communicate with one another. Further, network 112 can include a variety of network devices, including transceivers, routers, bridges, servers, computing devices, storage devices, and the like. In another implementation the network 112 can be a cellular network or mobile communication network based on various technologies, including but not limited to, Global System for Mobile (GSM), General Packet Radio Service (GPRS), Code Division Multiple Access (CDMA), Long Term Evolution (LTE), WiMAX, 5G or 6G network protocols, and the like.

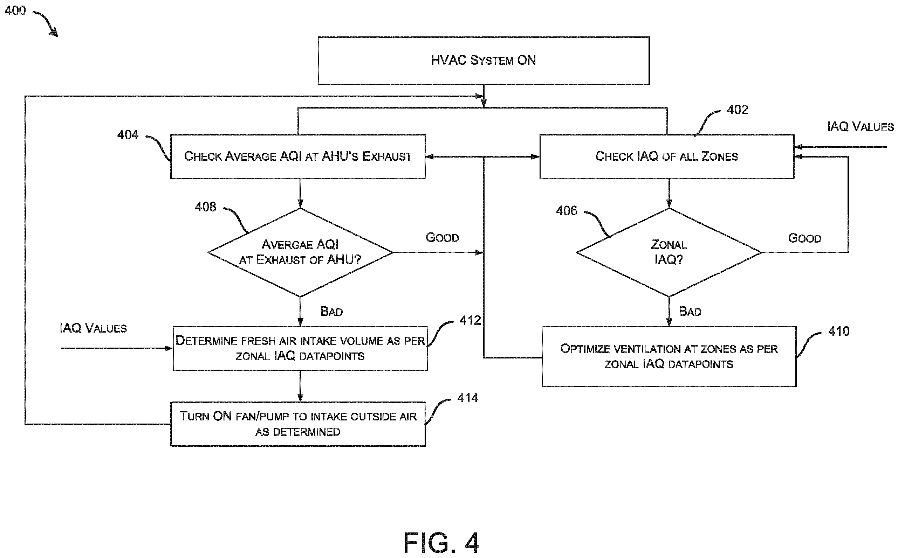

Referring to FIGs. 1 and 4, the controller 108 may be configured to receive, from the sensors S installed at the zones Z, a set of data packets pertaining to indoor air quality (IAQ) at each of the zones Z in real-time. The zones Z having an IAQ value above a predefined level or acceptable limit may be considered a "good zone" having higher IAQ. The zones having an IAQ value below the predefined level or acceptable limit may be considered a "bad zone" having lower IAQ. The controller monitors the IAQ of all the Zones Z in real-time at step 402 and further monitors/determines an average value of AQI at the exhaust of the AOI at step 404. Further, at step 406, when the IAQ of any of the zones (bad zones) is detected to be above the first predefined level or acceptable limit, the controller 108 may enable the AHU 106 and the HVAC unit 104 to circulate air from at least one of the good zones having the IAQ within the acceptable limit to the bad zones having the lower IAQ at step 410. The controller 108 may determine the volume of the air to be circulated to each of the bad zones (having the IAQ below the first predefined level), based on the real-time IAQ value at the bad zones and the good zones.

The controller 108 may be further configured to monitor or determine an average air quality index (AQI) at the exhaust of the AHU 106 at step 404 based on the IAQ values of each zone. At step 408, when the average AQI at the exhaust of the AHU 106 is detected to be above a second predefined level, the controller 108 may enable the AHU 106 to supply outside air into the AOI 102 at step 414. The controller 108, at step 412, may determine the air volume to be taken into the AOI (for step 414) based on the zonal IAQ data received by the controller 108. However, when the average AQI at the exhaust of the AHU 106 is detected to be below the second predefined level, the AHU 106 follows steps 402, and 410 and circulates air between the good zones and bad zones within the environment 102/AOI 102 to maintain the IAQ at all the zones within the acceptable limits, without the intake of outside air into the environment 102. For instance, when the IAQ at zones Z1 and Z2 is bad or below the predefined level but the IAQ at zone Z3 is good or above the predefined level with the average AQI at the exhaust of the AHU 106 is detected to be above the second predefined level, the system 100 may circulate air from the zone Z3 into the zones Z1 and Z2 to bring the IAQ of Z1 and Z2 in acceptable limits, without the intake of outside air into the environment/AOI 102. Further, in another instance, when the average AQI at the exhaust of the AHU 106 is detected to be above the second predefined level, the system 100 may enable the AHU 106 to supply outside air into the AOI 102 and the AHU 106 may further supply conditioned fresh air into the bad zones Z1 and Z2 only.

In one or more embodiments, when the IAQ of any of the plurality of zones (bad zones) is detected to be above the first predefined level or acceptable limit, the controller 108 may actuate the zone dampers associated with at least one of the good zones and the zone dampers of the bad zones to circulate the air from the good zones (having the IAQ in the acceptable limit) to the bad zones having lower IAQ. Further, when the average AQI at the exhaust of the AHU 106 is detected to be above the second predefined level, the controller 108 may enable the central damper to supply the outside air into the AOI 102 or the supply air stream duct. However, when the average AQI at the exhaust of the AHU 106 is detected to be below the second predefined level, the AHU 106 keeps the central damper closed and actuates the zone dampers to circulate air between the good zones and bad zones within the environment 102/AOI 102 to maintain the IAQ at all the zones within the acceptable limits, without the intake of outside air into the environment 102.

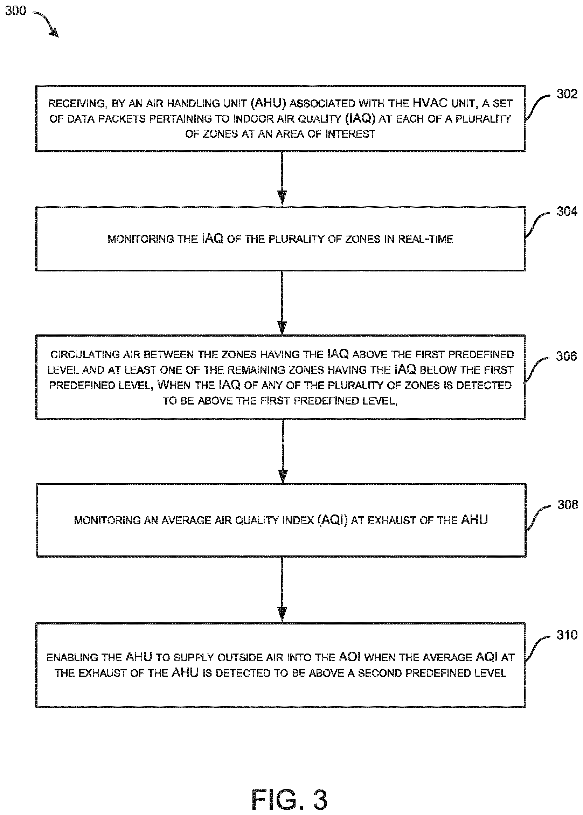

Referring to FIG. 3, a method 300 for controlling the operation and enhancing the efficiency of the HVAC system 104 in a multi-zone environment 102 while controlling indoor air quality at the zones is disclosed. Method 300 may involve the AHU 106, the controller 108, and other components associated with the system of FIG. 1 and 2. Method 300 may include step 302 of receiving, by the AHU 106 or controller 108 or the server 110, a set of data packets pertaining to the indoor air quality (IAQ) at each of a plurality of zones associated with the AOI 102/environment 102, followed by another step 304 of monitoring the IAQ of the zones in real-time. Further, when the IAQ of any of the plurality of zones is detected to be above a first predefined level/acceptable limits, method 300 may include step 306 of circulating air between the zones (bad zones) having the IAQ above the first predefined level and at least one of the remaining zones (good zones) having the IAQ below the first predefined level.

In one or more embodiments, at step 306, when the IAQ of any of the plurality of zones is detected to be above the first predefined level/acceptable limits method 300 may include actuation of the zone dampers associated with at least one of the good zones and the zone dampers of the bad zones to circulate the air from the good zones (having the IAQ in the acceptable limit) to the bad zones having lower IAQ.

Method 300 may further include step 308 of monitoring an average air quality index (AQI) at exhaust of the AHU 106, followed by step 310 of enabling the AHU 106 to supply outside air into the AOI 102 when the average AQI at the exhaust of the AHU 106 is detected to be above a second predefined level.

In one or more embodiments, at step 310, when the average AQI at the exhaust of the AHU 106 is detected to be above the second predefined level, method 300 may include actuating the central damper to supply the outside air into the AOI 102 or the supply air stream duct. However, in other embodiments, when the average AQI at the exhaust of the AHU 106 is detected to be below the second predefined level, the AHU 106 may keep the central damper closed and actuate the zone dampers to circulate air between the good zones and bad zones within the environment 102/AOI 102 to maintain the IAQ at all the zones within the acceptable limits, without the intake of outside air into the environment 102.

Referring to FIG. 2, the air handling unit (AHU) 106 may be used to regulate and circulate air within the AOI 102 and the zones Z1 to Zn of the AOI 102. AHU 106 may be a part of a larger heating, ventilation, and air conditioning system of the AOI 102. The AHU 106 is the composition of elements mounted in large, accessible box-shaped units installed at the AOI 102, which may be responsible for conditioning the supply air to ensure that the supply air is at the desired temperature, humidity, and air quality. The AHU 106 may include blowers 202, filters 204, heating or cooling coils 206, humidifiers or dehumidifiers 208, heat exchangers 210, a mixing chamber 212, and the like. The blower or fan 202 may be responsible for moving air through the AHU 106 and HVAC system 104, while the filter 204 may remove dust, pollen, and other contaminants from the outside air or return air. Filters 204 depending on the air purity requirements may be selected to provide a higher or lower particle, viruses, bacteria, odours, and other air pollutants retention. The heating or cooling coils 206 may be used to adjust the temperature of the supply air, while the humidifiers and dehumidifiers 208 control the moisture content of the supply air. The mixing chamber 212 may facilitate the air to be homogenized by facilitating the mixing of fresh outside air with the return air to achieve the desired air quality and temperature. The heat exchanger device 210 may transfer temperature between two fluids, in this case, coolant and the air, separated by solid barriers 214.

Thus, in addition to managing the proper ventilation at the AOI 102 and the bad zones with the air from the good zones and/or the outside air, the AHU 106 may perform other functions such as but not limited to filtration and control of the quality of the air that may reach the zones, and control of the air temperature that regulates the air conditioning system in cold or hot, so that the thermal sensation in the zones is in a desirable or user-defined range. The AHU 106 may further monitor and control the relative humidity for greater indoor comfort in the zones.

In one or more embodiments, the sensors S1 to Sn may be a carbon monoxide (CO) sensor, a carbon dioxide sensor (CO₂), a volatile organic compound (VOC) sensor, or a particulate sensor, but not limited to the like. The captured IAQ data of the zones may then be transmitted to the server 110 or controller 108 or the AHU 106 via a transceiver for further processing as already explained in detail in FIGs. 1 to 4. In one or more embodiments, the sensors S1 to Sn can be distributed at different positions within the zones Z1 to Zn of the environment 102. The distributed sensors S1 to Sn can be operatively connected to each other in a mesh network where a master sensor among the sensors may be in communication with the controller 108 or server 110 or AHU 106 via wired media or wireless media. In other embodiments, the sensors S1 to Sn can also be integrated with smoke sensors installed within the zones of the environment 102, wherein the smoke detector/IAQ sensors may be in communication with the controller 108 or server 110 or AHU 106 via wired media or wireless media. In some embodiments, all the sensors S1 to Sn can be positioned over a single frame that can be installed as a stand-alone device in different zones of the AOI 102.

Those skilled in the art would appreciate that the system 100 and method 300 are using the existing IAQ sensors (S1 to Sn), the AHU 106, and the dampers (D1 to Dn) that are already installed in the AOI 102, which keep system 100 simple, cost-effective, and sustainable. The controller 108 or the server 110 associated with the HVAC system 104 may utilize the existing sensors of the AOI 102 to get localized real-time IAQ data to the HVAC system 104 through a cloud or a building management system (BMS). Moreover, system 100 independently increases or decreases ventilation rates at the zones as per IAQ data provided by the IAQ sensors for given zones, rather than operating the AHU 106 to intake outside air to refresh the air inside the environment 102. In addition, the AHU may intake less air as per the real time IAQ data, so that AQI at the AHU may be a bad bit, however, the IAQ at few zones may still be good and there may be no fresh intake air requirements for such good zones. This may help reduce the overall air intake volume at the AHU 106. As the air intake volume is reduced, the energy consumed by the AHU 106 to condition and cool the incoming outside air also reduces accordingly, thereby improving the efficiency of the HVAC system 104. In addition, the carbon emission and energy bills may also be reduced.

Thus, the system and method provide a simple, efficient, and cost-effective solution that may be easily configured with the existing HVAC system and IAQ control system of any multi-zone environment or BMS, to control the operation and enhance the efficiency of the HVAC system while controlling the IAQ at each zone of the environment.

While the invention has been described with reference to exemplary embodiments, it will be understood by those skilled in the art that various changes may be made and equivalents may be substituted for elements thereof without departing from the scope of the invention as defined by the appended claims. Modifications may be made to adopt a particular situation or material to the teachings of the invention without departing from the scope thereof. Therefore, it is intended that the invention not be limited to the particular embodiment disclosed, but that the invention includes all embodiments falling within the scope of the invention as defined by the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

## Claims

1. A system to control operation of a heating, ventilation and air conditioning unit (104) for conditioning indoor air quality in a multi-zone area, the system comprising:
a controller (108) adapted to be operatively connected to an air handling unit (106) associated with the heating, ventilation and air conditioning unit (104);
wherein the controller (108) comprises a processor coupled to a memory storing instructions executable by the processor, the controller (108) is configured to receive, from one or more sensors (S) installed at a plurality of zones (Z) of an area of interest (102), a set of data packets pertaining to indoor air quality at each of the zones (Z) in real-time, and
wherein when the indoor air quality of any of the plurality of zones (Z) is detected to be above a first predefined level, the controller (108) enables the air handling unit (106) and the heating, ventilation and air conditioning unit (104) to circulate air from at least one of the remaining zones (Z) having the indoor air quality below the first predefined level to the zones (Z) having the indoor air quality above the first predefined level.

2. The system of claim 1, wherein the controller (108) is configured to determine:
a volume of the air to be circulated to each of the zones (Z) having the indoor air quality below the first predefined level, based on the real-time indoor air quality at the plurality of zones (Z); and/or
a volume of the outside air to be supplied into the area of interest (102) based on the real-time indoor air quality at the plurality of zones (Z).

3. The system of claim 1 or 2, wherein the controller (108) is configured to monitor or determine an average air quality index at an exhaust of the air handling unit (106), wherein when the average air quality index at the exhaust of the air handling unit (106) is detected to be above a second predefined level, the controller (108) enables the air handling unit (106) to supply outside air into the area of interest (102).

4. The system of any preceding claim, wherein the controller (108) is associated with the air handling unit (106) ,
wherein the air handling unit (106) is configured to:
receive and store the set of data packets pertaining to the indoor air quality at each of the zones (Z) in real-time; and
circulate the air between the zones (Z) having the indoor air quality above the first predefined level and at least one of the remaining zones (Z) having the indoor air quality below the first predefined level;
and optionally wherein when the average air quality index at the exhaust of the air handling unit (106) is detected to be above the second predefined level, the air handling unit (106) is configured to supply the outside air into the area of interest (102).

5. The system of any preceding claim, wherein the controller (108) is associated with a server (110) that is in communication with the one or more sensors (S) and the air handling unit (106),
wherein the server (110) is configured to:
receive and store the set of data packets pertaining to the indoor air quality at each of the zones (Z) in real-time; and
transmit a first set of actuation signals to the air handling unit (106) to enable the air handling unit (106) to circulate the air between the zones (Z) having the indoor air quality above the first predefined level and at least one of the remaining zones (Z) having the indoor air quality below the first predefined level;
and optionally wherein when the average air quality index at the exhaust of the air handling unit (106) is detected to be above the second predefined level, the server (110) is configured to transmit a second set of actuation signals to the air handling unit (106) to enable the air handling unit (106) to supply the outside air into the area of interest (102).

6. The system of any preceding claim, wherein the heating, ventilation and air conditioning unit (104) comprises:
a supply air stream duct (102-1, 102-2) comprising a plurality of interconnected supply channels to facilitate inflow of a supply air into the plurality of zones (Z) of the area of interest (102);
a return air duct comprising a plurality of interconnected return channels to facilitate outflow of a return air from each of the zones (Z);
a plurality of zone dampers (D) installed in the plurality of interconnected supply channels such that one of the zone dampers (D) is configured in each of the supply channels for individually regulating the flow of the supply air into each of the zones (Z);
wherein when the indoor air quality of any of the plurality of zones (Z) is detected to be above a first predefined level, the controller (108) actuates at least one of the zone dampers (D) to circulate the air from at least one of the remaining zones (Z) having the indoor air quality below the first predefined level to the zones (Z) having the indoor air quality above the first predefined level.

7. The system of any preceding claim, wherein the heating, ventilation and air conditioning unit (104) comprises a central damper configured between the air handling unit (106) and the supply air stream duct (102-1, 102-2), wherein the central damper is configured to regulate the flow of the supply air comprising any or a mixture of the outside air and the return air into the supply airstream duct (102-1, 102-2), and wherein when the average air quality index at the exhaust of the air handling unit (106) is detected to be above the second predefined level, the controller (108) enables the central damper to supply the outside air into the area of interest (102) or the supply air stream duct (102-1, 102-2).

8. A method (300) to control operation of a heating, ventilation and air conditioning system (104) for conditioning indoor air quality in a multi-zone area, the method comprising the steps of:
receiving (302), by an air handling unit (106) associated with the heating, ventilation and air conditioning unit (104), a set of data packets pertaining to indoor air quality at each of a plurality of zones (Z) at an area of interest (102);
monitoring (304) the indoor air quality of the plurality of zones (Z) in real-time; and
when the indoor air quality of any of the plurality of zones (Z) is detected to be above a first predefined level, circulating air between the zones (Z) having the indoor air quality above the first predefined level and at least one of the remaining zones (Z) having the indoor air quality below the first predefined level.

9. The method of claim 8, wherein the method comprises the step of actuating at least one of a plurality of zone dampers (D) associated with the zones (Z) of the area of interest (102), to circulate (306) air from at least one of the remaining zones (Z) having the indoor air quality below the first predefined level to the zones (Z) having the indoor air quality above the first predefined level.

10. The method of claim 8 or 9, wherein the method comprises the steps of:
monitoring (310) an average air quality index at an exhaust of the air handling unit (106); and
enabling the air handling unit (106) to supply outside air into the area of interest (102) when the average air quality index at the exhaust of the air handling unit (106) is detected to be above a second predefined level.

11. The method of claim 8, 9 or 10, wherein the method comprises the step of enabling a central damper at the exhaust of the air handling unit (106) to supply the outside air into the area of interest (102) when the average air quality index at the exhaust of the air handling unit (106) is detected to be above a second predefined level.

12. A heating ventilation and air conditioning system (104) for an area of interest (102) divided into a plurality of zones (Z), the heating, ventilation and air conditioning system (104) comprising:
a supply air stream duct (102-1, 102-2) comprising a plurality of interconnected supply channels to facilitate supply of a supply air to the plurality of zones (Z);
a return air duct for providing a plurality of interconnected return channels to facilitate recirculation of a return air from each of the zones (Z);
a plurality of zone dampers (D) installed in the plurality of interconnected supply channels such that one of the zone dampers (D) is configured in each of the supply channels for individually regulating the flow of supply air into each of the zones (Z);
one or more sensors (S) installed at the plurality of zones (Z), the sensors (S) being operable to monitor indoor air quality at each of the zones (Z) in real-time; and
an air handling unit (106) fluidically connected to the supply air stream duct (102-1, 102-2) and the return air stream duct, wherein the air handling unit (106) is in communication with the one or more sensors (S),
wherein when the indoor air quality of any of the plurality of zones (Z) is detected to be above a first predefined level, the air handling unit (106) and/or the heating, ventilation and air conditioning unit (104) actuate at least one of the zone dampers (D) to circulate air from at least one of the remaining zones (Z) having the indoor air quality below the first predefined level to the zones (Z) having the indoor air quality above the first predefined level.

13. The heating ventilation and air conditioning system (104) of claim 12, wherein the heating, ventilation and air conditioning system (104) comprises a central damper configured to regulate the flow of the supply air comprising any or a mixture of outside air and the return air into the supply airstream duct (102-1, 102-2).

14. The system of claim 12 or 13, wherein the air handling unit (106) is configured to monitor an average air quality index at an exhaust of the air handling unit (106), and wherein when the average air quality index at the exhaust of the air handling unit (106) is detected to be above a second predefined level, the heating, ventilation and air conditioning system (104) enables the central damper to supply the outside air into the area of interest (102); and/or wherein the air handling unit (106) is in communication with the one or more sensors (S), the zone dampers (D), and the central damper through a server (110).

15. The system of claim 12, 13 or 14, wherein the air handling unit (106) comprises one or more of:
a heat exchanger (210) to facilitate heat exchange between one or more of the supply air, the outside air, and the return air while flowing through the air handling unit (106);
one or more filters (204) to clean the air flowing through the air handling unit (106);
a cooler (206) configured to cool one or more of the return air, and the outside air while supplying as the supply air into the supply air stream duct (102-1, 102-2);
a heater configured to heat one or more of the return air, and the outside air while supplying as the supply air into the supply air stream duct (102-1, 102-2); and
a dehumidifier (208) to remove moisture from the supply air before supplying into the supply air stream duct (102-1, 102-2).
